# EUROPÄISCHE PATENTSCHRIFT

(11) **EP 3 475 775 B1**
(45) Veröffentlichungstag und Bekanntmachung des Hinweises auf die Patenterteilung: **27.03.2024**
(21) Anmeldenummer: 17730451.6
(22) Anmeldetag: 12.06.2017
(51) Int. Cl.: G06F 11/34, G05B 19/05

(54) **ERMITTELN EINER AUSFÜHRUNGSZEIT EINES ANWENDERPROGRAMMS**
DETERMINING THE EXECUTION TIME OF A USER PROGRAM
DÉTERMINATION D'UN TEMPS D'EXÉCUTION D'UN PROGRAMME D'APPLICATION

(30) Priorität: 01.08.2016 DE 102016214117
(43) Veröffentlichungstag der Anmeldung: 01.05.2019
(73) Patentinhaber: Siemens Aktiengesellschaft, 80333 München (DE)
(72) Erfinder: ERMLER, Rene, 91058 Erlangen (DE); KREBS, Cornelia, 90607 Rückersdorf (DE); NEIDIG, Jörg, 90419 Nürnberg (DE); QUIROS ARAYA, Gustavo, Princeton, NJ 08540 (US)
(74) Vertreter: Siemens Patent Attorneys
(86) Internationale Anmeldenummer: PCT/EP2017/064221
(87) Internationale Veröffentlichungsnummer: WO 2018/024390

(56) Entgegenhaltungen:
- EP-A1- 1 936 503
- EP-A1- 2 482 147
- EP-A2- 1 526 419
- WO-A1-2015/124170
- JP-A- 2001 209 411

## Beschreibung

### 1. Technisches Gebiet

Die vorliegende Erfindung betrifft eine Steuerungseinheit einer Automatisierungsanlage zum Ermitteln einer Ausführungszeit eines Anwenderprogramms sowie ein entsprechendes Verfahren und Computerprogrammprodukt. Die Steuerungseinheit ist insbesondere in dem technischen Bereich der Automatisierungstechnik und Industrie 4.0 angesiedelt.

### 2. Stand der Technik

Solche Steuerungseinheiten sind aus dem Stand der Technik bekannt. Beispielsweise kann eine Steuerungseinheit als eine speicherprogrammierbare Steuerung (SPS, PLC) oder ein Feldbuskoppler ausgebildet sein. Die Steuerungseinheit ist üblicherweise über einen Datenübertragungskanal, wie einen Feldbus, mit weiteren Systemmodulen in einer Automatisierungsanlage verbunden. Ferner kann die Steuerungseinheit über den Feldbus Daten mit den weiteren Systemmodulen austauschen und über ein Anwenderprogramm ansteuern, beispielsweise an- oder abschalten.

Dabei ist die Steuerungseinheit insbesondere für zeitkritische Automatisierungsaufgaben im industriellen Umfeld geeignet und ist für den Echtzeitbetrieb ausgelegt. Beispielsweise kann die Steuerungseinheit mittels Sensoren erkennen, ob die Sicherheit zwischen Mensch und Maschine gefährdet ist. Beispielweise werden Grenzwerte nicht eingehalten. Gegebenenfalls kann die Steuerungseinheit daraufhin durch Ausführung des Anwenderprogramms die Automatisierungsanlage abschalten und somit in einen sicheren Zustand überführen. Für die Ausführung des Anwenderprogramms oder der Applikation benötigt die Steuerungseinheit eine bestimmte Zeitdauer, welche im Folgenden als Ausführungszeit, Laufzeit oder Zykluszeit des Anwenderprogramms bezeichnet wird.

Dabei ist es erforderlich, dass die zeitlichen Anforderungen des Anwenderprogramms eingehalten werden. Die Einhaltung liegt üblicherweise in der Verantwortung des Anwenders oder des Automatisierungstechnikers, der den Automatisierungscode oder Source-Code des Anwenderprogramms implementiert. Eine Schwierigkeit ist darin zu sehen, dass die Zeit für einen Zyklus nicht deterministisch ist in dem Sinne, dass sie weder konstant noch vorher berechenbar ist.

Herkömmliche Engineering-Systeme bieten dem Anwender jedoch nur Hilfsfunktionen für die Überwachung der Ausführungszeit des Anwenderprogramms. Diese Hilfsfunktionen können in einer Simulation sowie in der realen Steuerung bei der Inbetriebnahme angewendet werden. Dabei werden beispielsweise die minimale, maximale und die durchschnittliche Ausführungszeit erfasst und angezeigt. Die maximale Ausführungszeit ist die längste Zeit, die beim Beobachten auftritt während die minimale Ausführungszeit die kürzeste Zeit ist, die beim Beobachten auftritt.

Die in der Simulation auf einem Rechner errechneten und angezeigten Werte geben jedoch nicht hinreichend Hinweise bezüglich den Anforderungen beim Einsatz in der realen Automatisierungsanlage, da sich die SPS-Hardware (bsp. Prozessor, Speicher, Ablaufumgebung) erheblich von der PC-Hardware der Simulationsumgebung unterscheiden kann. Insbesondere sind Werte, welche während der Ausführungszeit auf einer realen Steuerungseinheit gemessen werden, nicht direkt übertragbar auf andere Hardware-Varianten. Folglich lässt sich nicht daraus schließen, wie sich das Anwenderprogramm auf einer leistungsschwächeren oder -stärkeren Hardware verhalten wird. Ferner sind die gemessenen Werte situationsabhängig, das heißt je nach Situation der Automatisierungsanlage kann sich das Anwenderprogramm zeitlich stark unterschiedlich verhalten.

Ferner sind Engineering-Systeme aus dem Stand der Technik bekannt. Das Engineering-System ist ein Programm, in dem der Programmierer das Anwenderprogramm erstellt sowie den Zustand der Steuerung erfahren kann. Bekannte Engineering-Systeme stellen jedoch keine Funktionen für eine konkrete Abschätzung der maximalen Ausführungszeit des Anwenderprogramms bereit. Ferner stellen die Engineering-Systeme nicht hinreichend sicher, dass die entsprechenden zeitlichen Grenzen eingehalten werden.

Die Abschätzung der Ausführungszeit und die Einhaltung der Grenzen sind beispielsweise bei der Auswahl der richtigen Steuerungshardware von Bedeutung. Der Anwender kann zwischen einer leistungsstarken oder einer leistungsschwachen Steuerungseinheit auswählen. Die Auswahl kann insbesondere auf der Basis der Abschätzung einer Steuerungseinheit erfolgen. Steuerungseinheiten, welche ausreichend leistungsstark sind, aber nicht zu viele ungenutzte Leistungsreserven haben werden beispielweise bevorzugt ausgewählt. Aus WO 2015/124170 A1 und JP 2001 209411 A sind verschiedene Ansätze bekannt, um eine Ausführungszeit einer Anwendung zu ermitteln.

Die Druckschrift EP 2 482 147 A1 betrifft ein Verfahren und eine Automatisierungskomponente zur Anpassung der Taktfrequenz eines Mikroprozessors in einer industriellen Automatisierungsanordnung. Die Druckschrift EP 1 526 419 A2 betrifft ein Verfahren zum Bereitstellen von Laufzeitinformationen für Computerprogramme zum Steuern von Industrierobotern.

Die vorliegende Erfindung stellt sich daher die Aufgabe eine Steuerungseinheit einer Automatisierungsanalage bereitzustellen, welche die Ausführungszeit eines Anwenderprogramms für eine beliebige Steuerungseinheit in effizienter Weise abschätzen kann.

### 3. Zusammenfassung der Erfindung

Die oben genannte Aufgabe wird erfindungsgemäß gelöst durch eine Steuerungseinheit einer Automatisierungsanlage zum Ermitteln einer Ausführungszeit eines Anwenderprogramms nach Anspruch 1.

Die Erfindung ist auf eine Steuerungseinheit einer Automatisierungsanlage gerichtet, insbesondere eine speicherprogrammierbare Steuerung (SPS). Alternativ kann auch eine andere Steuerungseinheit eingesetzt werden. Wie bereits weiter oben ausgeführt führt die Steuerungseinheit üblicherweise ein Anwenderprogramm aus. Das Anwenderprogramm wird auch herkömmlich als Hauptproramm bezeichnet und weist eine Abfolge von Befehlen oder Anweisungen für verschiedene oder gleiche Funktionen auf, beispielsweise Steuerbefehle zum Ansteuern von Industrie,- oder Automatisierungsanlagen. Im Falle einer SPS, weist das Anwenderprogramm entsprechend SPS-Befehle auf.

Die Zeitdauer, die das Anwenderprogramm für die Ausführung benötigt, wird als Ausführungszeit oder Laufzeit bezeichnet, wie bereits weiter oben definiert. Die Ausführungszeit setzt sich aus den Zeitdauern der einzelnen Befehle zusammen. Je nach Anzahl, Umfang oder Dauer der Befehle etc. kann die Ausführungszeit länger oder kürzer sein. Im Gegensatz zur Ausführungszeit ist die Systemzeit eine sich verändernde Uhrzeit während der Ausführung des Anwenderprogramms.

Die Ausführungszeit wird durch die erste Zeitermittlungseinheit ermittelt. Das Programm kann einmal oder mehrfach ausgeführt werden. Im ersten Fall, wird die Ausführungszeit für genau die eine Ausführung bestimmt, indem der Zeitbedarf aller Einzelbefehle zusammenrechnet wird. Im zweiten Fall, in welchem das Programm sehr oft aufgerufen wird, sind unterschiedliche Situationen zu betrachten und verschiedene Teile des Programms werden ausgeführt. Demnach kann hier die minimale, durchschnittliche oder maximale Ausführungszeit statistisch betrachtet werden.

Durch die Ermittlung der Ausführungszeit können zeitliche Grenzen überwacht werden. Im obigen Beispiel, im Falle der Ermittlung der maximalen Ausführungszeit, kann abgeschätzt werden, wie lange das Anwenderprogramm im schlimmsten Fall ("worst case") laufen wird. In anderen Worten formuliert, ist die Ausführungszeit eine fiktive Zeit und für jeden Befehl wird die schlimmstmögliche Zeit angenommen. Damit kann abgeschätzt werden, wie lange das Anwenderprogramm in dieser Situation höchstens brauchen wird.

Zum einen kann die Ausführungszeit für die aktuelle Steuerungseinheit mit der integrierten Zeitermittlungseinheit ermittelt werden.

Dementsprechend kann beispielsweise die maximale Ausführungszeit einer vorliegenden Steuerungseinheit mit der integrierten Zeitermittlungseinheit ermittelt werden. In anderen Worten formuliert, kann mittels der integrierten Zeitermittlungseinheit abgeschätzt werden, wie sich die vorliegende Steuerungseinheit im Betrieb verhalten wird und wie lange sie im schlimmsten Fall brauchen wird, um das Anwenderprogramm erfolgreich zu beenden. Dadurch kann die Leistung im schlimmsten Fall ("Worst-Case-Performance") der Steuerungseinheit abgeschätzt und auch ermittelt werden, ob die vorliegende Steuerungseinheit ausreicht, um bestimmte Anforderungen zu erfüllen oder nicht. Folglich kann dadurch bestimmt werden, ob die aktuelle Steuerungseinheit ausgetauscht werden sollte oder eine andere Entscheidung gefällt werden sollte.

Beispielsweise ist die vorliegende Steuerungseinheit leistungsschwächer im Vergleich zu einer leistungsstärkeren Steuerungseinheit etc. und es ist fraglich, ob die leistungsschwächere den gewünschten Anforderungen genügt. Alternativ können jegliche andere Merkmale der Steuerungseinheit als Entscheidungsgrundlage dienen.

Zum anderen kann erfindungsgemäß, alternativ oder zusätzlich die Ausführungszeit für eine andere Steuerungseinheit ermittelt werden, unabhängig davon, ob diese andere Steuerungseinheit eine Zeitermittlungseinheit aufweist. Folglich können beispielsweise die Ausführungszeit oder sonstige statistische Daten einer vorhandenen Steuerungseinheit mit der integrierten Zeitermittlungseinheit ermittelt werden und als Basis zur Ermittlung der Ausführungszeit einer anderen Steuerungseinheit verwendet werden.

Im Fall einer SPS einer Automatisierungsanlage wird die Ausführungszeit der SPS-Befehle des Anwenderprogramms der SPS oder einer anderen SPS auf effiziente und genaue Weise ermittelt. Dadurch kann gleichermaßen die Steuerung der Automatisierungsanlage durch die SPS besser überwacht werden.

Die Ermittlung der Ausführungszeit für die Steuerungseinheit oder für die andere Steuerungseinheit wird dabei unter Einhaltung mindestens einer Randbedingung durchgeführt und in einem ersten Betriebsmodus. Die Einhaltung der einen oder mehreren Randbedingungen gewährleistet bezüglich der Ausführungszeit einen fehlerfreien und effizienten Ablauf des Anwenderprogramms auf der Steuerungseinheit sowie der Ermittlung. Das Anwenderprogramm kann vorteilhafterweise ununterbrochen ausgeführt werden.

In einer Ausgestaltung ist die erste Zeitermittlungseinheit eine virtuelle Uhr. Dementsprechend ist die virtuelle Uhr vollständig in die Steuerungseinheit integriert und somit fester Bestandteil der Steuerungseinheit. Vorzugsweise erfolgt der Zeitfortschritt der virtuellen Uhr unabhängig von einer realen Uhr und ermittelt somit keine reale Uhrzeit (auch Echtzeit genannt).

Erfindungsgemäß ist die mindestens eine Randbedingung eine Bedingung der Hardware oder der Software der Steuerungseinheit oder der anderen Steuerungseinheit.

In einer weiteren Ausgestaltung ist die mindestens eine Randbedingung eine Systembedingung, eine Speicherbelegung, eine Netzwerklast oder eine Hardware-Ressource. Dementsprechend ist die Randbedingung eine Anforderung oder Grenze der Hardware oder Software der Steuerungseinheit oder der anderen Steuerungseinheit des Anwenderprogramms der Steuerungseinheit oder der anderen Steuerungseinheit oder des übergeordneten Engineering-Systems, welches die Steuerungseinheit oder die andere Steuerungseinheit und/oder weitere Systemkomponenten umfassen kann. Durch die Einhaltung wird ein reibungsloser und effizienter Ablauf der Programme auf der Steuerungseinheit oder der anderen Steuerungseinheit und insbesondere der Ermittlung der Ausführungszeit des Anwenderprogramms für die Steuerungseinheit oder die andere Steuerungseinheit ermöglicht. Dadurch werden Fehler von Anfang an abgefangen und aufwendige, zeitintensive und komplexe nachträgliche Fehlerbehandlungsmaßnahmen werden entsprechend vermieden.

Erfindungsgemäß kann mittels eines Schalters die erste Zeitermittlungseinheit von dem ersten Betriebsmodus in einen zweiten Betriebsmodus wechseln. Dementsprechend kann die erste Zeitermittlungseinheit von dem ersten Betriebsmodus in einen zweiten Betriebsmodus umschalten. Die Umschaltung kann beispielsweise durch eine Software erfolgen, welche von der Steuerungseinheit oder der anderen Steuerungseinheit ausgeführt wird, beispielsweise die Systemsoftware. Demnach ist die Umschaltung keine Funktion des Anwenderprogramms.

In einer weiteren Ausgestaltung beeinflusst die erste Zeitermittlungseinheit weiterhin das Anwenderprogramm der Steuerungseinheit oder der anderen Steuerungseinheit, insbesondere unter Berücksichtigung der ermittelten Ausführungszeit. Dementsprechend ermittelt die erste Zeitermittlungseinheit die Ausführungszeit des Anwenderprogramms für die Steuerungseinheit oder die andere Steuerungseinheit in einem Schritt. Diese Ausführungszeit wird durch die erste Zeitermittlungseinheit in einem weiteren Schritt weiterverarbeitet. Beispielsweise kann die erste Zeitermittlungseinheit in dem weiteren Schritt die Systemzeit relativ zur Echtzeit beeinflussen und e.g. verlangsamen oder beschleunigen. Dadurch wird vorteilhafterweise eine Verlangsamung oder Beschleunigung der Ausführung nachgebildet, da mehr oder weniger Systemzeit für die Ausführung des Anwenderprogramms benötigt wird. In anderen Worten formuliert, erfolgt eine dynamische Rückkopplung in Echtzeit zwischen der Zeitermittlungseinheit und dem Anwenderprogramm.

In einer weiteren Ausgestaltung ermittelt die erste Zeitermittlungseinheit die Ausführungszeit unabhängig von einer Echtzeit und/oder während der Ausführung des Anwenderprogramms auf der Steuerungseinheit. Dementsprechend führt die erste Zeitermittlungseinheit, insbesondere die virtuelle Uhr, die Ermittlung der Ausführungszeit des Anwenderprogramms für die Steuerungseinheit oder die andere Steuerungseinheit unabhängig von einer realen Uhr und deren Echtzeit durch. Alternativ oder zusätzlich führt die erste Zeitermittlungseinheit diese Ermittlung während der Ausführung des Anwenderprogramms auf der Steuerungseinheit durch. Daher wird sowohl die Ermittlung als auch die Ausführung des Anwenderprogramms parallel durchgeführt. Vorteilhafterweise kann die Steuerungseinheit hiermit ohne Unterbrechung betrieben werden und es kommt zu keinem Zeitverlust im Betrieb oder verzögerten Ausführungszeiten einzelner Programme.

Erfindungsgemäß ist der erste Betriebsmodus ein Zeitermittlungsmodus und der zweite Betriebsmodus ein Normalmodus. Dementsprechend wird die obige Ermittlung der Ausführungszeit in einem Zeitermittlungsmodus durchgeführt und die Zeitermittlungseinheit ist aktiv. Im Gegensatz dazu wird die obige Ermittlung der Ausführungszeit in einem Normalmodus nicht durchgeführt und die Zeitermittlungseinheit ist somit inaktiv. Dadurch wird vorteilhafterweise der Normalbetrieb nicht gestört. Weiterhin sind auch andere Modi denkbar.

In einer weiteren Ausgestaltung weist die Steuerungseinheit weiterhin eine zweite Zeitermittlungseinheit, insbesondere eine Echtzeituhr, auf.

In einer weiteren Ausgestaltung ermittelt die zweite Zeitermittlungseinheit die Systemzeit in einem zweiten Betriebsmodus und die zweite Zeitermittlungseinheit kann von dem zweiten Betriebsmodus in den ersten Betriebsmodus wechseln.

Dementsprechend weist die Steuerungseinheit neben einer ersten Zeitermittlungseinheit eine zweite Zeitermittlungseinheit auf. Die zweite Zeitermittlungseinheit ist eine Echtzeituhr oder reale Uhr zur Erfassung der Systemzeit. Im Normalmodus entspricht die Systemzeit der Echtzeit und die Echtzeituhr ist aktiv. Dagegen kann die Systemzeit im Zeitermittlungsmodus von der Echtzeit abweichen. Zwischen den beiden Betriebsmodi kann beliebig gewechselt werden, bidirektional.

In einer weiteren Ausgestaltung wird die ermittelte Ausführungszeit weiterbehandelt. Dementsprechend kann das Ergebnis, die Ausführungszeit, der Ermittlung weiterverarbeitet werden. Beispielweise kann ein Ist/Soll-Vergleich durchgeführt werden. Die Ausführungszeit kann entsprechend mit einem SollWert (vorbestimmter Grenzwert) verglichen werden. Die ermittelte Ausführungszeit einer leistungsschwachen Steuerungseinheit kann mit einem Grenzwert, beispielweise hier maximale Ausführungszeit, verglichen werden. Bei Überschreitung der maximalen Ausführungszeit kann eine Entscheidung getroffen werden. In diesem Fall kann die Entscheidung getroffen werden, die leistungsschwache Steuerungseinheit durch eine leistungsstärkere Steuerungseinheit auszutauschen, um die Ausführungszeit zu minimieren. Anders formuliert, kann geprüft werden, ob die aktuelle Steuerungseinheit auf der Grundlage der ermittelten Ausführungszeit durch eine leistungsstärkere, leistungsschwächere, günstigere, etc. Steuerungseinheit ausgetauscht werden sollte. Zusätzlich oder alternativ zu dem Ist-/Soll-Vergleich können andere Algorithmen oder Verfahrensschritte Anwendung finden.

Die Erfindung betrifft ferner ein Verfahren gemäß Anspruch 9 zum Ermitteln einer Ausführungszeit eines Anwenderprogramms.

Die Erfindung betrifft ferner ein Computerprogrammprodukt gemäß Anspruch 13 mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden bevorzugte Ausführungsformen der Erfindung weiter beschrieben mit Bezug auf die folgenden Figuren.
- Fig. 1: zeigt eine erfindungsgemäße Steuerungseinheit einer Automatisierungsanlage zum Ermitteln einer Ausführungszeit eines Anwenderprogramms (a) im Normalmodus und (b) im Zeitermittlungsmodus.
- Fig. 2: zeigt ein Zeitdiagramm a) im Normalmodus und (b) im Zeitermittlungsmodus gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die begleitenden Figuren beschrieben.

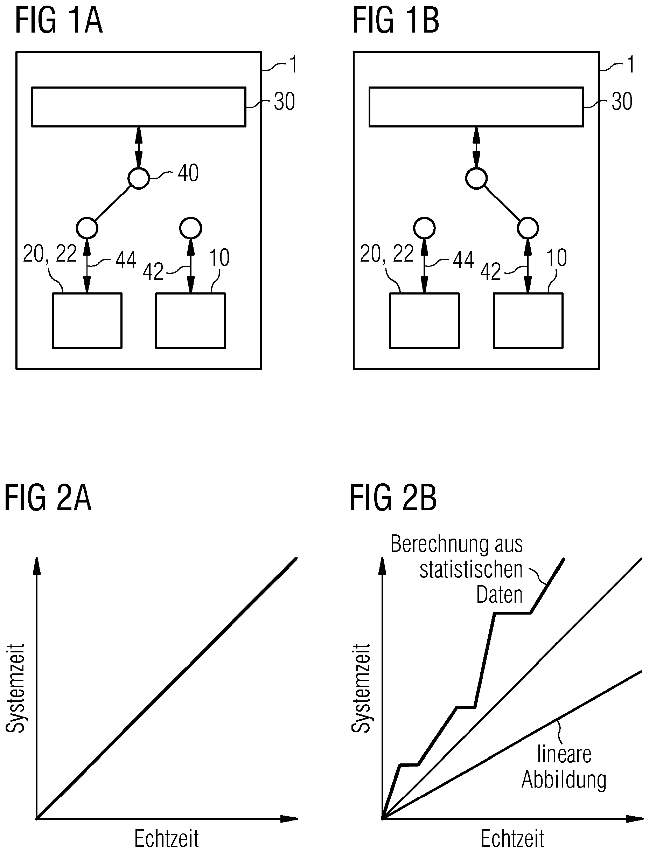

Fig. 1 zeigt eine Steuerungseinheit 1 zum Durchführen einer Ermittlung einer Ausführungszeit eines Anwenderprogramms gemäß der Erfindung. Wie dargestellt, ist eine erste Zeitermittlungseinheit 10 als ein Bestandteil in die Steuerungseinheit 1 integriert. Die erste Zeitermittlungseinheit 10 ist beispielweise eine virtuelle Uhr. Ferner ist eine Echtzeituhr als zweite Zeitermittlungseinheit 20 in die Steuerungseinheit 1 integriert. Der Zeitfortschritt der virtuellen Uhr 10 kann unabhängig von der Echtzeit erfolgen.

Ferner führt die Steuerungseinheit 1 ein Anwenderprogramm 30 aus und die Ausführungsdauer oder Ausführungszeit ist die Zeitdauer, die das Anwenderprogramm 30 für die Ausführung benötigt. Diese Ausführungszeit und somit die spürbare Ausführungsgeschwindigkeit des Anwenderprogramms 30 kann mittels der virtuellen Uhr 10 erfasst werden. Dazu wird zu jedem aktuell ausgeführten Befehl des Anwenderprogramms bestimmt, wie groß dessen Ausführungszeit im gewünschten Anwendungsfall ist, beispielsweise die durchschnittliche Zeit, ein linear skalierter Wert, ein Worst-Case-Wert oder die statistische Ausführungszeit dieses Befehls auf einer anderen Steuerung. Die festgestellte Zeit wird zum Wert der virtuellen Uhr addiert. An der virtuellen Uhr kann nach Beendigung des Programmdurchlaufs (Zyklus) die Ausführungszeit ermittelt werden.

Wie in einer üblichen Steuerungseinheit 1 wird das Anwenderprogramm 30 relativ zur Systemzeit der Steuerungseinheit 1 ausgeführt. Diese Zeit kann für die Erfassung von Zeitstempeln und für das Auslösen von zeitgesteuerten Ereignissen verwendet werden. Die Steuerungseinheit 1 kann in zwei unterschiedlichen Modi oder Betriebsarten ausgeführt werden, nämlich einem ersten Betriebsmodus 42, dem Normalmodus, und einem zweiten Betriebsmodus 44, dem Zeitermittlungsmodus. Die Steuerungseinheit 1 kann durch einen Schalter 40 zwischen diesen zwei Betriebsmodi 42, 44 beliebig hin und her wechseln oder umschalten. Der Schalter kann dabei eine Software sein.

Im Normalmodus 44 legt die Echtzeituhr 20 der Steuerungseinheit 1 die Systemzeit fest. Damit stimmt die Systemzeit mit der Echtzeit 22 überein. Der Normalmodus 44 entspricht dem normalen Ausführungsmechanismus in einer herkömmlichen Steuerungseinheit 1.

Im Zeitermittlungsmodus 42 kann die virtuelle Uhr 10 die Echtzeituhr 20 in der Steuerungseinheit 1 ersetzen und die Systemzeit für die Steuerungseinheit 1 (dargestellt) und/oder für eine andere Steuerungseinheit (nicht dargestellt) ermitteln. In anderen Worten formuliert, wird im Zeitermittlungsmodus 42 die erfindungsgemäße Ermittlung durchgeführt. Im diesem Fall kann daher die Systemzeit von der Echtzeit 22 abweichen. Folglich läuft das Anwenderprogramm 30 nicht mehr "so schnell wie möglich" in Echtzeit, sondern schreitet auf Basis der virtuellen Uhr 10 schneller oder langsamer fort. Das Anwenderprogramm 30 kann daher dennoch relativ zur Echtzeit 22 mit derselben Geschwindigkeit ablaufen, denn es wird nur der Fortschritt der Systemzeit verändert.

Beispielsweise kann die virtuelle Uhr 10 die folgenden Funktionen durchführen, um die Ausführungszeit für die Steuerungseinheit 1 mit der virtuellen Uhr 10 (dargestellt) oder einer anderen Steuerungseinheit (nicht dargestellt) zu ermitteln. Die Steuerungseinheit 1 wird auch als erste Steuerungseinheit bezeichnet und die andere Steuerungseinheit als zweite Steuerungseinheit zu vereinfachten Beschreibung der folgenden Funktionsweise.

In einer Ausführungsform kann die maximale Ausführungszeit mittels statistischer Laufzeitdaten nachgebildet werden. Anhand von zuvor gesammelten statistischen Daten über die Laufzeit von Befehlen für den aktuellen Typ der Steuerungseinheit kann die virtuelle Uhr die Ausführungszeit ermitteln. Dabei werden die Laufzeiten für die einzelnen ausgeführten Befehle entsprechend deren maximaler Dauer künstlich verlängert, und dabei die Systemzeit relativ zur Echtzeit beschleunigt. Damit wird eine Verlangsamung der Ausführung effektiv nachgebildet, da mehr Systemzeit für die Ausführung des Programms benötigt wird. Die resultierende Laufzeit entspricht einer Abschätzung des "Worst-Case-Performance" für die aktuelle Steuerungseinheit.

In einer Ausführungsform kann die maximale Ausführungszeit bei einer zweiten Steuerungseinheit mittels statistischer Laufzeitdaten nachgebildet werden. Zunächst werden statistische Daten über die Laufzeit von SPS-Befehlen der ersten Steuerungseinheit gesammelt. Danach kann die virtuelle Uhr auf der Basis dieser statistischen Daten die Ausführungszeit für eine zweite Steuerungseinheit für die einzelnen SPS-Befehle der ersten Steuerungseinheit entsprechend deren maximalen Dauer der Ausführungszeit ermitteln. Damit wird die Systemzeit entsprechend der Leistung der zweiten Steuerungseinheit effektiv beschleunigt e.g. für eine langsamere SPS oder verlangsamt e.g. für eine schnellere Steuerungseinheit. Die resultierende Laufzeit entspricht dann dem Verhalten der zweiten Steuerungseinheit.

In einer Ausführungsform kann die Leistung einer zweiten SPS mittels eines relativen Leistungsfaktors nachgebildet werden. Dementsprechend kann die virtuelle Uhr die Systemzeit als eine lineare Abbildung der Echtzeit ermitteln, beispielsweise für eine zweite Steuerungseinheit und auf der Basis eines entsprechenden Leistungsfaktors relativ zu der ersten Steuerungseinheit. Die Steigung ist beispielsweise der Kehrwert des relativen Leistungsfaktors. Damit wird eine lineare Beschleunigung e.g. für eine langsamere Steuerungseinheit oder eine lineare Verlangsamung e.g. für eine schnellere Steuerungseinheit der Systemzeit relativ zur Echtzeit erzeugt. Die Variation bei der Systemzeit wirkt sich auf die Ausführung des Anwenderprogramms aus. Beispielsweise werden zeitgesteuerte Funktionen bei einer beschleunigten (bzw. verlangsamten) Systemzeit öfter (bzw. seltener) bezüglich der realen Zeit aktiviert werden, und dies wird zu häufigeren (bzw. selteneren) Unterbrechungen von Hintergrundprozessen führen - eine Nachbildung der Ausführung in einer leistungsschwächeren (bzw. leistungsstärkeren) Steuerungseinheit entsprechend dem relativen Leistungsfaktor. Der relative Leistungsfaktor spiegelt dementsprechend die Erwartung wieder, dass eine Vorrichtung beispielsweise mit 50% höherer Taktrate z.B. 25 % schneller oder ein Gerät mit einem Achtkernprozessor doppelt so schnell wie eine Vorrichtung mit einem Zweikernprozessor ist.

In einer anderen Ausführungsform der Erfindung kann die integrierte virtuelle Uhr die Ausführungszeit für die erste und/oder die zweite Steuerungseinheit parallel zur Ausführung des Anwenderprogramms ermitteln. Alternativ kann die Ausführung des Anwenderprogramms auch unterbrochen werden, beispielweise für einen bestimmten Zeitraum, um eine andere Funktion zu erfüllen oder in einen Ruhezustand und somit dritten Betriebsmodus umzuschalten. Der dritte Zustand wird auch Freeze Mode genannt, und dient der Untersuchung des Zustands und der Fehlerdetektion etc.

Vorteilhafterweise ist die Ermittlung der linearen Abbildung mit einem sehr geringen Rechneraufwand verbunden und beeinflusst die Gesamtausführungsdauer gar nicht oder unerheblich. Dagegen kann die Zeitermittlung aus zuvor gesammelten statistischen Daten zu längeren Ausführungszeiten führen. Vorteilhafterweise werden die Zeitwerte für die Systemzeit in diesem Fall jedoch nur aus bekannten Daten ermittelt. Daher ist keine aufwendige und zeitintensive Messung notwendig. Durch die Abwägung der jeweiligen Vor- und Nachteile und des jeweiligen Anwendungszwecks kann eine entsprechende Funktion beliebig gewählt werden. Dabei ist die entsprechende Berechnung der Systemzeit unabhängig von der tatsächlichen Dauer des Anwenderprogramms während der Ermittlung, und die dafür benötigte Ausführungszeit hat keinen Einfluss auf die Ergebnisse.

In einer weiteren Ausführungsform der Erfindung kann durch das Verlangsamen und das Beschleunigen der virtuellen Zeit gegenüber der Echtzeit simuliert werden, wie sich das Anwenderprogramm 30 auf einer leistungsschwächeren oder einer leistungsstärkeren Steuerungseinheit 1 verhalten würde. Da zeitbehaftete Tasks (Timer, Weckalarme, etc.) auf Basis der virtuellen Zeit gestartet werden können und die Programmausführung unverändert fortschreiten kann, kann der Effekt eines langsameren oder eines schnelleren Prozessors getestet werden. Der Test beantwortet, ob die Zykluszeit verletzt wird und ob die nebenläufigen Prozesse schnell genug abgearbeitet werden können.

In einer weiteren Ausführungsform der Erfindung können die ermittelten Ausführungszeiten weiter ausgewertet werden. Die weitere Auswertung kann durch die Steuerungseinheit oder durch das Engineering-System erfolgen. Die Steuerung bietet dazu die Möglichkeiten, die Einzelnen Parameter der Ausführungszeitermittlung einzustellen und die Ergebnisse (Ausführungszeiten) automatisiert abzufragen. Mit den gewonnenen Werten können daraufhin weitere statistische Berechnungen (Mittelwerte, Minimal- und Maximalwerte, Standardabweichungen, Langzeitkurven, etc.) ausgeführt werden. Hierzu kann das Engineering-System selbst Funktionalitäten bereitstellen oder eine Software oder andere Applikation verwendet werden. Beispielsweise kann die Erfüllung von zeitlichen Anforderungen des Anwenderprogramms im Engineering-System gemäß projektierten Zeitkonfigurationen für das Anwenderprogramm überwacht werden.

## Patentansprüche

1. Steuerungseinheit (1) einer Automatisierungsanlage zum Ermitteln einer Ausführungszeit eines Anwenderprogramms (30), wobei die Steuerungseinheit (1) eine speicherprogrammierbare Steuerung ist, aufweisend:
eine erste Zeitermittlungseinheit (10),
welche dazu ausgebildet ist, in einem ersten Betriebsmodus (42) die Ausführungszeit für die Steuerungseinheit (1) und/oder eine andere Steuerungseinheit zu ermitteln,
wobei die Ermittlung der Ausführungszeit mindestens eine Randbedingung berücksichtigt, und
wobei die Ermittlung der Ausführungszeit statistische Daten über die Laufzeit von Befehlen des Anwenderprogramms (30) der Steuerungseinheit (1) oder einer linearen Abbildung der Echtzeit (22) der Steuerungseinheit berücksichtigt;
**dadurch gekennzeichnet, dass** die mindestens eine Randbedingung eine Bedingung der Hardware oder der Software der Steuerungseinheit (1) oder der anderen Steuerungseinheit ist; wobei
die erste Zeitermittlungseinheit (10) mittels eines Schalters (40) von dem ersten Betriebsmodus (42) in einen zweiten Betriebsmodus (44) wechselt; wobei
der erste Betriebsmodus (42) ein Zeitermittlungsmodus und der zweite Betriebsmodus (44) ein Normalmodus ist.

2. Steuerungseinheit nach Anspruch 1, wobei die erste Zeitermittlungseinheit (10) eine virtuelle Uhr ist.

3. Steuerungseinheit nach Anspruch 1 oder Anspruch 2, wobei die mindestens eine Randbedingung eine Systembedingung, eine Speicherbelegung, eine Netzwerklast oder eine Hardware-Ressource betrifft.

4. Steuerungseinheit nach einem der vorhergehenden Ansprüche, wobei die erste Zeitermittlungseinheit (10) weiterhin dazu ausgebildet ist, das Anwenderprogramm (30) der Steuerungseinheit (1) oder der anderen Steuerungseinheit zu beeinflussen, insbesondere unter Berücksichtigung der ermittelten Ausführungszeit.

5. Steuerungseinheit nach einem der vorhergehenden Ansprüche, wobei die erste Zeitermittlungseinheit (10) dazu ausgebildet ist, die Ausführungszeit unabhängig von einer Echtzeit (22) und/oder während der Ausführung des Anwenderprogramms (30) auf der Steuerungseinheit (1) zu ermitteln.

6. Steuerungseinheit nach einem der vorhergehenden Ansprüche, weiterhin aufweisend eine zweite Zeitermittlungseinheit (20), insbesondere eine Echtzeituhr.

7. Steuerungseinheit nach Anspruch 6, wobei die zweite Zeitermittlungseinheit (20) dazu ausgebildet ist, eine Systemzeit in dem zweiten Betriebsmodus (44) zu ermitteln und die zweite Zeitermittlungseinheit (20) von dem zweiten Betriebsmodus (44) in den ersten Betriebsmodus (42) wechseln kann.

8. Steuerungseinheit nach einem der vorhergehenden Ansprüche, wobei die Steuerungseinheit dazu ausgebildet ist, die ermittelte Ausführungszeit weiterzubehandeln.

9. Verfahren zum Ermitteln einer Ausführungszeit eines Anwenderprogramms (30), aufweisend die folgenden Schritte:
Ermitteln durch eine erste Zeitermittlungseinheit (10) einer ersten Steuerungseinheit (1) der Ausführungszeit für die Steuerungseinheit (1) oder eine andere Steuerungseinheit in einem ersten Betriebsmodus (42) wobei die Steuerungseinheit (1) eine speicherprogrammierbare Steuerung ist,
wobei die Ermittlung der Ausführungszeit mindestens eine Randbedingung berücksichtigt, und
wobei die Ermittlung der Ausführungszeit statistische Daten über die Laufzeit von Befehlen des Anwenderprogramms (30) der Steuerungseinheit (1) oder einer linearen Abbildung der Echtzeit (22) der Steuerungseinheit berücksichtigt;
**dadurch gekennzeichnet, dass** die mindestens eine Randbedingung eine Bedingung der Hardware oder der Software der ersten Steuerungseinheit (1) oder der anderen Steuerungseinheit ist; wobei
die erste Zeitermittlungseinheit (10) mittels eines Schalters (40) von dem ersten Betriebsmodus (42) in einen zweiten Betriebsmodus (44) wechselt; wobei
der erste Betriebsmodus (42) ein Zeitermittlungsmodus und der zweite Betriebsmodus (44) ein Normalmodus ist.

10. Verfahren nach Anspruch 9, wobei die erste Zeitermittlungseinheit (10) eine virtuelle Uhr ist.

11. Verfahren nach Anspruch 9 oder Anspruch 10, wobei die mindestens eine Randbedingung eine Systembedingung, eine Speicherbelegung, eine Netzwerklast oder eine Hardware-Ressource betrifft.

12. Verfahren nach einem der vorhergehenden Ansprüche, wobei die erste Zeitermittlungseinheit (10) von dem ersten Betriebsmodus (42) in einen zweiten Betriebsmodus (44) wechseln kann, insbesondere mittels eines Schalters (40) .

13. Computerprogrammprodukt mit einem Computerprogramm, das Mittel zur Durchführung des Verfahrens nach einem der Ansprüche 9 bis 12 aufweist, wenn das Computerprogramm auf einer programmgesteuerten Einrichtung zur Ausführung gebracht wird.

## Claims

1. Control unit (1) of an automation system for determining an execution time of an application program (30), wherein the control unit (1) is a programmable logic controller, having:
a first time determination unit (10),
which is designed to determine the execution time for the control unit (1) and/or another control unit in a first operating mode (42),
wherein the determination of the execution time takes into account at least one boundary condition, and
wherein the determination of the execution time takes into account statistical data relating to the runtime of instructions of the application program (30) of the control unit (1) or a linear representation of the real time (22) of the control unit;
**characterized in that** the at least one boundary condition is a condition of the hardware or software of the control unit (1) or of the other control unit; wherein
the first time determination unit (10) changes from the first operating mode (42) to a second operating mode (44) by means of a switch (40); wherein
the first operating mode (42) is a time determination mode and the second operating mode (44) is a normal mode.

2. Control unit according to Claim 1, wherein the first time determination unit (10) is a virtual clock.

3. Control unit according to Claim 1 or Claim 2, wherein the at least one boundary condition relates to a system condition, a memory assignment, a network load or a hardware resource.

4. Control unit according to one of the preceding claims, wherein the first time determination unit (10) is also designed to influence the application program (30) of the control unit (1) or of the other control unit, in particular taking into account the determined execution time.

5. Control unit according to one of the preceding claims, wherein the first time determination unit (10) is designed to determine the execution time independently of a real time (22) and/or during the execution of the application program (30) on the control unit (1).

6. Control unit according to one of the preceding claims, also having a second time determination unit (20), in particular a real-time clock.

7. Control unit according to Claim 6, wherein the second time determination unit (20) is designed to determine a system time in the second operating mode (44) and the second time determination unit (20) can change from the second operating mode (44) to the first operating mode (42).

8. Control unit according to one of the preceding claims, wherein the control unit is design to further process the determined execution time.

9. Method for determining an execution time of an application program (30), having the following steps of:
determining, by means of a first time determination unit (10) of a first control unit (1), the execution time for the control unit (1) or another control unit in a first operating mode (42), wherein the control unit (1) is a programmable logic controller, wherein the determination of the execution time takes into account at least one boundary condition, and
wherein the determination of the execution time takes into account statistical data relating to the runtime of instructions of the application program (30) of the control unit (1) or a linear representation of the real time (22) of the control unit;
**characterized in that** the at least one boundary condition is a condition of the hardware or software of the first control unit (1) or of the other control unit; wherein
the first time determination unit (10) changes from the first operating mode (42) to a second operating mode (44) by means of a switch (40); wherein
the first operating mode (42) is a time determination mode and the second operating mode (44) is a normal mode.

10. Method according to Claim 9, wherein the first time determination unit (10) is a virtual clock.

11. Method according to Claim 9 or Claim 10, wherein the at least one boundary condition relates to a system condition, a memory assignment, a network load or a hardware resource.

12. Method according to one of the preceding claims, wherein the first time determination unit (10) can change from the first operating mode (42) to a second operating mode (44), in particular by means of a switch (40).

13. Computer program product having a computer program which has means for carrying out the method according to one of Claims 9 to 12 when the computer program is executed on a program-controlled device.

## Revendications

1. Unité de commande (1) d'une installation d'automatisation destinée à déterminer un temps d'exécution d'un programme d'application (30), dans laquelle l'unité de commande (1) est une commande programmable, présentant :
une première unité de détermination de temps (10),
qui est configurée pour déterminer dans un premier mode de fonctionnement (42) le temps d'exécution pour l'unité de commande (1) et/ou une autre unité de commande,
dans laquelle la détermination du temps d'exécution prend en compte au moins une condition marginale, et
dans laquelle la détermination du temps d'exécution prend en compte des données statistiques sur la durée de service d'instructions du programme d'application (30) de l'unité de commande (1) ou d'une représentation linéaire du temps réel (22) de l'unité de commande ;
**caractérisée en ce que** l'au moins une condition marginale est une condition du matériel ou du logiciel de l'unité de commande (1) ou de l'autre unité de commande ; dans laquelle la première unité de détermination de temps (10) passe d'un premier mode de fonctionnement (42) à un second mode de fonctionnement (44) au moyen d'un commutateur (40) ; dans laquelle
le premier mode de fonctionnement (42) est un mode de détermination de temps et le second mode de fonctionnement (44) est un mode normal.

2. Unité de commande selon la revendication 1, dans laquelle la première unité de détermination de temps (10) est une horloge virtuelle.

3. Unité de commande selon la revendication 1 ou la revendication 2, dans laquelle l'au moins une condition marginale concerne une condition système, une allocation de mémoire, une charge réseau ou une ressource matérielle.

4. Unité de commande selon l'une quelconque des revendications précédentes, dans laquelle la première unité de détermination de temps (10) est en outre configurée pour influencer le programme d'application (30) de l'unité de commande (1) ou de l'autre unité de commande, en particulier en prenant en compte le temps d'exécution déterminé.

5. Unité de commande selon l'une quelconque des revendications précédentes, dans laquelle la première unité de détermination de temps (10) est configurée pour déterminer le temps d'exécution indépendamment d'un temps réel (22) et/ou pendant l'exécution du programme d'application (30) sur l'unité de commande (1).

6. Unité de commande selon l'une quelconque des revendications précédentes, présentant en outre une seconde unité de détermination de temps (20), en particulier une horloge temps réel.

7. Unité de commande selon la revendication 6, dans laquelle la seconde unité de détermination de temps (20) est configurée pour déterminer une heure système dans le second mode de fonctionnement (44) et la seconde unité de détermination de temps (20) peut passer du second mode de fonctionnement (44) au premier mode de fonctionnement (42).

8. Unité de commande selon l'une quelconque des revendications précédentes, dans laquelle l'unité de commande est configurée pour poursuivre le traitement du temps d'exécution déterminé.

9. Procédé destiné à la détermination d'un temps d'exécution d'un programme d'application (30), présentant les étapes suivantes :
détermination par le biais d'une première unité de détermination de temps (10)d'une première unité de commande (1) du temps d'exécution pour l'unité de commande (1) ou une autre unité de commande dans un premier mode de fonctionnement (42), dans lequel l'unité de commande (1) est une commande programmable,
dans lequel la détermination du temps d'exécution prend en compte au moins une condition marginale, et
dans lequel la détermination du temps d'exécution prend en compte des données statistiques sur la durée de service d'instructions du programme d'application (30) de l'unité de commande (1) ou d'une représentation linéaire du temps réel (22) de l'unité de commande ;
**caractérisé en ce que** l'au moins une condition marginale est une condition du matériel ou du logiciel de la première unité de commande (1) ou de l'autre unité de commande ; dans lequel
la première unité de commande (10) au moyen d'un commutateur (40) passe du premier mode de fonctionnement (42) à un second mode de fonctionnement (44) ; dans lequel
le premier mode de fonctionnement (42) est un mode de détermination de temps et le second mode de fonctionnement (44) est un mode normal.

10. Procédé selon la revendication 9, dans lequel la première unité de détermination de temps (10) est une horloge virtuelle.

11. Procédé selon la revendication 9 ou la revendication 10, dans lequel l'au moins une condition marginale concerne une condition système, une allocation de mémoire, une charge réseau ou une ressource matérielle.

12. Procédé selon l'une quelconque des revendications précédentes, dans lequel la première unité de détermination de temps (10) peut passer du premier mode de fonctionnement (42) à un second mode de fonctionnement (44), en particulier au moyen d'un commutateur (40).

13. Produit de programme informatique avec un programme informatique qui présente des moyens destinés à la mise en oeuvre du procédé selon l'une quelconque des revendications 9 à 12 lorsque le programme informatique est installé sur un équipement commandé par programme en vue d'une exécution.
